# EUROPEAN PATENT APPLICATION

(11) **EP 4 692 630 A1**
(43) Date of publication of application: **11.02.2026**
(21) Application number: 24779484.5
(22) Date of filing: 13.03.2024
(51) Int. Cl.: F16L 59/02, B32B 5/02, B32B 7/027, B32B 27/12, H01M 10/625, H01M 10/658, H01M 50/204

(54) **COVER PROTECTOR AND MANUFACTURING METHOD THEREFOR, AND BATTERY MODULE**

(30) Priority: 29.03.2023 JP 2023053778; 09.02.2024 JP 2024018669
(71) Applicant: IBIDEN CO., LTD., Ogaki-shi, Gifu 503-8604 (JP)
(72) Inventor: KOGA Yoshihiro, Ibi-gun, Gifu 501-0695 (JP); SHIMADA Shohei, Ibi-gun, Gifu 501-0695 (JP)
(74) Representative: Hoffmann Eitle
(86) International application number: PCT/JP2024/009873
(87) International publication number: WO 2024/203355

(57) **Abstract**

Provided are: a cover protector and a method for manufacturing same, capable of enhancing adhesiveness between a heat insulating material and a prescribed surface such as an inner wall surface of a battery case; and a battery module. A cover protector (10) includes: a heat insulating material (1) containing first organic fibers (3); and an organic film (2) bonded to at least a portion of a surface of the heat insulating material (1). At least a portion of the first organic fibers (3) protrudes from the surface of the heat insulating material (1). A battery module (100) includes: the cover protector (10); a storage battery (110); and a battery case (120) that accommodates the cover protector (10) and the storage battery (110).

## Description

### TECHNICAL FIELD

The present invention relates to a cover protector, a production method therefor, and a battery module including the cover protector.

### BACKGROUND ART

In recent years, a lithium ion secondary battery has been used in electric vehicles and the like for environmental conservation. However, since the lithium ion secondary battery contains an organic electrolytic solution, when the battery ignites during thermal runaway, there is a risk that a flame is generated and damages a battery pack.

As a countermeasure, for example, Patent Literature 1 proposes a thermal runaway suppression fire-resistant sheet having excellent fire resistance and heat insulation property. The fire-resistant sheet includes a base material and an inorganic particle layer containing an inorganic particle and an inorganic binder, in which the base material contains a glass fiber, a wet heat adhesive binder fiber, and a fibrillated heat-resistant fiber. In addition, the inorganic particle layer includes a coating layer that coats a surface of the fiber contained in the base material, and a heat insulation layer that is present on at least one surface of the base material.

### CITATION LIST

### PATENT LITERATURE

Patent Literature 1: JP2021-96935A

### SUMMARY OF INVENTION

### TECHNICAL PROBLEM

In order to prevent a fire from spreading to the outside of a battery module, in the case where an attempt is made to bond the fire-resistant sheet as described above to a wall surface or a ceiling surface of the battery case in which a battery is housed, there is a problem that adhesiveness between the fire-resistant sheet and an inner wall surface of the battery case is extremely weak. In this way, when the adhesiveness between the fire-resistant sheet and a predetermined surface is weak, in the case where a fire occurs due to thermal runaway of the battery, the fire-resistant sheet is likely to fall off, and a fire-resistant effect and a heat insulation effect by the fire-resistant sheet cannot be obtained. As a result, there is a possibility of danger to surrounding objects and people.

The present invention has been made in view of the above problems, and an object of the present invention is to provide a cover protector capable of improving adhesiveness between a heat insulation material and a predetermined surface such as an inner wall surface of a battery case, a production method therefor, and a battery module.

### SOLUTION TO PROBLEM

The above object of the present invention is achieved by the following configuration [1] relating to a cover protector.
[1] A cover protector including:
   a heat insulation material containing fibers including first organic fibers and/or inorganic fibers; and
   an organic film bonded to at least a part of a surface of the heat insulation material, in which
   at least a part of the first organic fibers protrudes from the surface of the heat insulation material.
   Preferred embodiments of the present invention relating to the cover protector relate to the following [2] to [11].
[2] The cover protector according to [1], in which the first organic fibers are water-insoluble.
[3] The cover protector according to [1] or [2], in which the heat insulation material contains the first organic fibers and second organic fibers having a different property from the first organic fibers.
[4] The cover protector according to [3], in which the second organic fibers are water-soluble.
[5] The cover protector according to [3] or [4], in which
   the first organic fibers are polyethylene terephthalate fibers, and
   the second organic fibers are vinylon fibers.
[6] The cover protector according to any one of [1] to [5], in which the inorganic fibers include at least one kind selected from silica fibers, alumina fibers, alumina silicate fibers, zirconia fibers, glass fibers, and mineral-based fibers other than these fibers.
[7] The cover protector according to any one of [1] to [6], in which the fibers protruding from the surface of the heat insulation materials are fused to the organic film.
[8] The cover protector according to any one of [1] to [7], in which
   the heat insulation material has a first surface and a second surface facing each other,
   the organic film is disposed on the first surface, and
   an inorganic fiber layer is disposed on the second surface.
[9] The cover protector according to [8], in which the heat insulation material and the inorganic fiber layer are bonded to each other by an adhesive layer.
[10] The cover protector according to [8] or [9], in which the heat insulation material and the inorganic fiber layer are covered with the organic film.
[11] The cover protector according to any one of [8] to [10], in which the inorganic fiber layer is obtained by processing at least one kind selected from silica fibers, alumina fibers, glass fibers, and metal fibers into a layer shape.
   The above object of the present invention is achieved by the following configuration [12] relating to a method for producing a cover protector.
[12] A method for producing the cover protector according to any one of [1] to [11], the method including:
   a heat insulation material preparation step of preparing the heat insulation material by processing a material for a heat insulation material containing fibers including the first organic fibers and/or the inorganic fibers into a sheet shape; and
   a bonding step of bonding the organic film to at least a part of the surface of the heat insulation material, in which
   in the heat insulation material preparation step, the heat insulation material is prepared such that, among the first surface and the second surface of the heat insulation material facing each other, the fibers protrude from at least the first surface, and
   in the bonding step, the organic film is bonded to the first surface of the heat insulation material.
   Preferred embodiments of the present invention relating to the method for producing a cover protector relate to the following [13] and [14].
[13] The method for producing a cover protector according to [12], in which in the heat insulation material preparation step, the heat insulation material is prepared from the material for a heat insulation material by a wet papermaking method.
[14] The method for producing a cover protector according to [12] or [13], in which in the bonding step, the first surface of the heat insulation material and the organic film are bonded to each other by an adhesive or thermal fusion.
   The above object of the present invention is achieved by the following configuration [15] relating to a battery module.
[15] A battery module including:
   the cover protector according to any one of [1] to [11];
   a storage battery; and
   a battery case housing the cover protector and the storage battery.
   In addition, a preferred embodiment of the present invention relating to the battery module relates to the following [16].
[16] The battery module according to [15], in which
   the battery case has a ceiling surface, a side wall surface, and a bottom wall surface inside, and
   the organic film in the cover protector is bonded to at least one selected from the ceiling surface, the side wall surface, and the bottom wall surface so that the cover protector is attached inside the battery case.

### ADVANTAGEOUS EFFECTS OF INVENTION

In the cover protector according to the present invention, the first organic fibers protruding from the surface of the heat insulation material and the organic film firmly are bonded to each other, and the organic film has excellent adhesiveness to other surfaces, so that the adhesiveness between the heat insulation material and the predetermined surface can be improved.

In addition, since the method for producing a cover protector according to the present invention can easily produce a heat insulation material having excellent adhesiveness to an organic film, the cover protector can be easily produced at a low production cost.

Further, in the battery module according to the present invention, since the cover protector according to the present invention is bonded to the battery case that houses the storage battery, it is possible to prevent the cover protector from falling off during thermal runaway. Therefore, the heat insulation property of the heat insulation material can be maintained, and even when a flame is generated, spreading of the flame to the outside can be more reliably prevented.

### BRIEF DESCRIPTION OF DRAWINGS

[Fig. 1] Fig. 1 is a schematic diagram showing a cover protector according to a first embodiment of the present invention.
[Fig. 2] Fig. 2 is a schematic diagram showing a cover protector according to a second embodiment of the present invention.
[Fig. 3] Fig. 3 is a schematic cross-sectional view showing a cover protector according to a third embodiment of the present invention.
[Fig. 4] Fig. 4 is a cross-sectional view schematically showing a battery module according to an embodiment of the present invention.

### DESCRIPTION OF EMBODIMENTS

Hereinafter, embodiments of the present invention will be described in detail with reference to the drawings. Note that, the present invention is not limited to the embodiments described below, and can be freely changed and implemented without departing from the gist of the present invention.

### [Cover Protector]

### <First Embodiment>

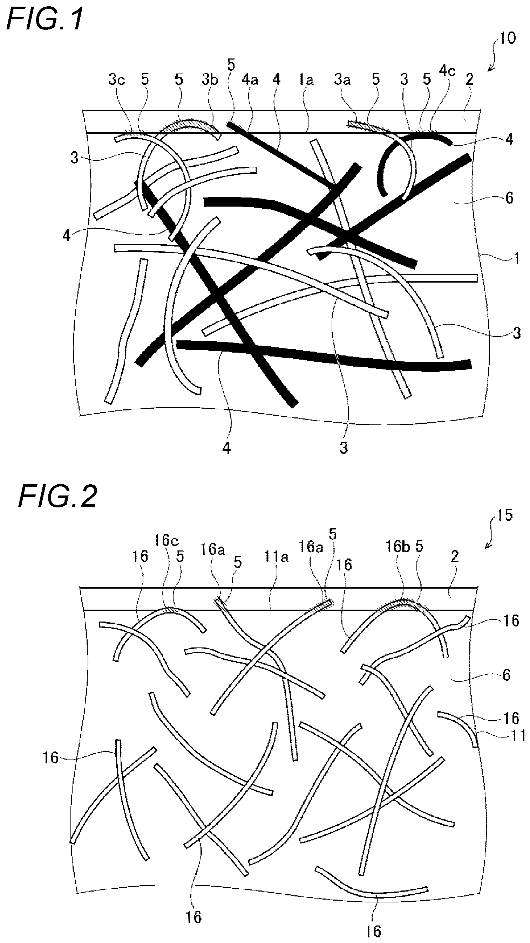

Fig. 1 is a schematic diagram showing a cover protector according to a first embodiment of the present invention. A cover protector 10 includes a heat insulation material 1 and an organic film 2. The heat insulation material 1 contains, as fibers, first organic fibers 3 and second organic fibers 4, and also contains inorganic particles 6. The first organic fibers 3 and the second organic fibers 4 protrude from a first surface 1a among facing main surfaces of the heat insulation material 1. Specifically, the first surface 1a of the heat insulation material 1 are formed with a protruding portion 3a in which one end portion of the first organic fiber 3 is embedded in the heat insulation material 1 and only the other end portion protrudes, a protruding portion 3b in which both end portions are embedded in the heat insulation material 1 and only a central region protrudes in a loop shape, and a protruding portion 3c in which only a part of a surface of the first organic fiber 3 protrudes from the first surface 1a of the heat insulation material 1. In addition, a protruding portion 4a in which one end portion of the second organic fiber 4 is embedded in the heat insulation material 1 and only the other end portion protrudes from the first surface 1a and a protruding portion 4c in which only a part of a surface of the second organic fiber 4 protrudes from the first surface 1a of the heat insulation material 1 are also formed. Further, although not shown, only a central region of the second organic fiber 4 may have a protruding portion protruding in a loop shape. The protruding portions 3a, 3b, and 3c of the first organic fibers 3 and the protruding portions 4a and 4c of the second organic fibers 4 are bonded to the organic film 2 by an adhesive (not shown), and accordingly, the organic film 2 is bonded to at least a part of a surface of the heat insulation material 1.

Here, when attempting to bond a general heat insulation material to an organic film, the adhesiveness to the organic film is remarkably low depending on a state of the surface of the heat insulation material, and it is difficult to bond the heat insulation material to the organic film with a high adhesive force. For example, in Fig. 1, the surface of the heat insulation material 1 is flat, but the actual surface of the heat insulation material has irregularities, and in particular, a heat insulation material formed by papermaking has large irregularities, so that it is extremely difficult to bond the heat insulation material to the organic film. In the present embodiment, since the heat insulation material 1 contains the inorganic particles 6 and powdery particles are bonded to the surface of the heat insulation material 1, the adhesiveness to other adhesive substances is remarkably low.

On the other hand, in the cover protector 10 according to the first embodiment as shown in Fig. 1, a part of the first organic fibers 3 and a part of the second organic fibers 4 are embedded in the heat insulation material 1, and a part of the first organic fibers 3 and a part of the second organic fibers 4 protrude from the first surface 1a of the heat insulation material 1 to form the protruding portions 3a, 3b, 3c, 4a, and 4c. In addition, since the first organic fibers 3 and the second organic fibers 4 have flexibility, when the heat insulation material 1 and the organic film 2 are overlapped, the protruding portions 3a, 3b, 3c, 4a, and 4c are in a state of falling in a direction substantially parallel to the first surface 1a on the first surface 1a of the heat insulation material 1. Therefore, a contact region 5 between the first organic fibers 3 and the organic film 2 and between the second organic fibers 4 and the organic film 2 is extremely large compared to that in the related art, and a high adhesive force can be obtained between the heat insulation material 1 and the organic film 2. Accordingly, for example, in the case where the heat insulation material 1 is bonded to a predetermined surface, the organic film 2 can be bonded to another surface by an adhesive, an adhesive tape, or the like. As a result, the heat insulation material 1 can be bonded to another surface via the organic film 2 with a high adhesive force, and peeling off of the heat insulation material 1 from a predetermined surface can be suppressed.

Note that, as shown in Fig. 1, when both the end portions of the first organic fiber 3 or the second organic fiber 4 are embedded in the heat insulation material 1, the first organic fiber 3 and the second organic fiber 4 can be suppressed from falling off from the heat insulation material 1. In addition, the first organic fibers 3 and the second organic fibers 4 embedded in the heat insulation material 1 may be entangled with other first organic fibers 3 and other second organic fibers 4 inside the heat insulation material 1. Accordingly, it is possible to further suppress the first organic fibers 3 and the second organic fibers 4 from falling off from the heat insulation material.

In the present embodiment, the heat insulation material 1 and the organic film 2 are bonded to each other by an adhesive, but the bonding method in the present invention is not limited to an adhesive. For example, it is also possible to use a method in which the heat insulation material 1 and the organic film 2 are stacked and then pressed in a thickness direction while being heated. Since each of the first organic fibers 3 and the second organic fibers 4, and the organic film 2 is composed of an organic material, they are melted by heating and fused by being pressurized. Therefore, as shown in the present embodiment, by increasing the contact region 5, a fusion area is also increased, and the heat insulation material 1 and the organic film 2 can be bonded to each other with a higher adhesive force.

In the present embodiment, the heat insulation material 1 contains the first organic fibers 3, the second organic fibers 4, and the inorganic particles 6, but the present invention is not limited to such a configuration. The heat insulation material may contain fibers including the first organic fibers 3 and/or inorganic fibers. An embodiment in which the heat insulation material contains inorganic fibers will be described below.

### <Second Embodiment>

Fig. 2 is a schematic diagram showing a cover protector according to a second embodiment of the present invention. In the second embodiment shown in Fig. 2, components that are the same as those in the cover protector according to the first embodiment shown in Fig. 1 are denoted by the same reference numerals, and detailed description thereof will be omitted or simplified. A cover protector 15 according to the second embodiment includes a heat insulation material 11 and the organic film 2. The heat insulation material 11 contains inorganic fibers 16 as the fibers and the inorganic particles 6. Similar to the first embodiment, the inorganic fibers 16 protrude from the first surface 1a of facing main surfaces of the heat insulation material 11. Specifically, a protruding portion 16a in which only one end portion protrudes, a protruding portion 16b in which only a central region protrudes in a loop shape, and a protruding portion 16c in which only a part of a surface of the inorganic fiber 16 protrudes are formed. The protruding portions 16a, 16b, and 16c of the inorganic fibers 16 are bonded to the organic film 2 by an adhesive (not shown), and accordingly, the organic film 2 is bonded to at least a part of the surface of the heat insulation material 11.

In the cover protector 15 according to the second embodiment configured as described above, since a part of each of the protruding portions 16a, 16b, and 16c is embedded in the heat insulation material 11 and a part of each of the protruding portions 16a, 16b, and 16c are bonded to the organic film, a high adhesive force can be obtained between the heat insulation material 11 and the organic film 2. In addition, since the inorganic fibers 16 are resistant to heat and does not melt even by heating, high adhesive strength can be maintained even in the case where the cover protector 15 in which the heat insulation material 11 and the organic film 2 are bonded to each other by the adhesive is exposed to high heat. Note that, even in the case where the heat insulation material 11 does not contain organic fibers, the heat insulation material 11 and the organic film 2 are overlapped, then the heat insulation material 11 and the organic film 2 are pressurized in the thickness direction while being heated, so that the surface of the organic film 2 is melted, and the inorganic fibers 16 and the organic film 2 can be bonded to each other.

In the second embodiment shown in Fig. 2, the heat insulation material 11 may further contain the first organic fibers 3 or the second organic fibers 4. When the heat insulation material contains the inorganic fibers 16 and the organic fibers, the organic fibers and the organic film 2 can be fused, and the heat insulation material 11 and the organic film 2 can be firmly bonded to each other. In addition, since the inorganic fibers and the organic fibers protruding from a first surface 11a of the heat insulation material 11 are entangled with each other on the surface of the heat insulation material 11, a higher adhesive force can be obtained between the heat insulation material 11 and the organic film 2.

### <Third Embodiment>

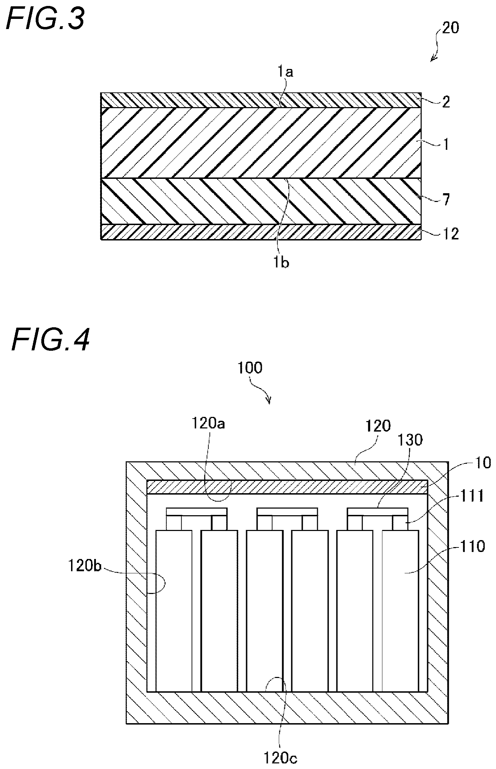

Fig. 3 is a schematic cross-sectional view showing a cover protector 20 according to a third embodiment of the present invention. In the third embodiment shown in Fig. 3, components that are the same as those in the first embodiment shown in Fig. 1 are denoted by the same reference numerals, and detailed description thereof will be omitted or simplified. The cover protector 20 includes the heat insulation material 1, the organic film 2 bonded to the first surface 1a, which is the main surface of the heat insulation material 1, and an inorganic fiber layer 7 bonded to a second surface 1b, which is the other main surface of the heat insulation material 1 facing the first surface 1a. Further, in the cover protector 20, an organic film 12 is bonded to a surface of the inorganic fiber layer 7 opposite to a surface on a heat insulation material 1 side. Note that, the adhesive structure between the heat insulation material 1 and the organic film 2 is the same as that of the first embodiment, and thus the illustration thereof is omitted.

In the cover protector 20 according to the third embodiment configured as described above, a high adhesive force can be obtained between the heat insulation material 1 and the organic film 2 as in the first embodiment. In addition, since the inorganic fiber layer 7 is provided on a second surface 1b side of the heat insulation material 1, the heat insulation material 1 can be protected by the inorganic fiber layer 7 in the case where an article is damaged and scattered around the cover protector 20. Therefore, the damage to the heat insulation material 1 can be suppressed, and an excellent heat insulation effect and flameproof effect can be maintained.

Further, since the cover protector 20 according to the present embodiment includes the organic film 2 and the organic film 12 on the outermost side, in the case where the heat insulation material 1 includes, for example, inorganic particles, it is possible to prevent the inorganic particles from falling off.

Note that, depending on a method for producing the heat insulation material 1, more fibers may protrude from one of the pair of main surfaces, for example, the first surface 1a side. In such a case, when the organic film 2 is bonded to the first surface 1a side, excellent adhesiveness between the heat insulation material 1 and the organic film 2 can be obtained.

In the cover protector according to the present invention, the heat insulation material may contain fibers including the first organic fibers and/or the inorganic fibers, and the fibers may protrude to form a protruding portion. Accordingly, the contact region 5 can be ensured between the protruding portion and the organic film 2, and the heat insulation material 1 and the organic film 2 can be bonded to each other with a high adhesive force. Note that, the inorganic fiber layer 7, the organic film 12, and the like further stacked on the heat insulation material 1 are not necessarily required, and can be freely selected. In the third embodiment shown in Fig. 3, the heat insulation material 1 containing the first organic fibers 3 and the second organic fibers is used, but as shown in the second embodiment, the heat insulation material 11 containing the inorganic fibers 16 may be used. A heat insulation material containing the first organic fibers 3, the second organic fibers, and the inorganic fibers 16, or a heat insulation material containing only the first organic fibers 3 may be used.

In addition, in the third embodiment, the organic film 2 and the organic film 12 may be composed of the same organic material or different organic materials, although the obtained effects are different. Further, a stacked body of the heat insulation material 1 and the inorganic fiber layer 7 may be completely covered with an organic film, that is, the stacked body may be included in the organic film.

As described in the first and second embodiments, for example, in the case of bonding the organic film 2 to a predetermined surface, an adhesive force for supporting at least a weight of the heat insulation material 1 is required between the heat insulation material 1 and the organic film 2. However, as shown in the third embodiment, the inorganic fiber layer 7 and the organic film 12 need only have an adhesive force that supports only the weight of the organic film 12, and thus it is not necessary to bond the inorganic fiber layer 7 to the organic film 12 with a high adhesive force. Therefore, the inorganic fiber layer 7 and the organic film 12 can be bonded to each other by a general method, for example, an adhesive or thermal fusion.

Hereinafter, materials for the heat insulation material 1, the organic film 2, the inorganic fiber layer 7, and the adhesive constituting the cover protector 10 according to the present embodiment will be described in detail.

### [Heat Insulation Material]

The heat insulation material 1 used for the cover protector 10 according to the present embodiment is not particularly limited as long as the heat insulation material 1 contains the first organic fibers 3 and provides a heat insulation effect. A thermal conductivity can be mentioned as an indicator indicating the heat insulation effect. In the present embodiment, the thermal conductivity of the heat insulation material 1 is preferably less than 1 (W/m·K), more preferably less than 0.5 (W/m·K), and still more preferably less than 0.2 (W/m·K). Further, the thermal conductivity of the heat insulation material 1 is even more preferably less than 0.1 (W/m·K), even still more preferably less than 0.05 (W/m·K), and particularly preferably less than 0.02 (W/m·K).

Note that, the thermal conductivity of the heat insulation material 1 can be measured in accordance with "Testing method for thermal conductivity of refractories" described in JIS R 2251.

As the heat insulation material 1, a material containing the first organic fibers 3 and/or the inorganic fibers 16 and containing, for example, at least one kind selected from inorganic particles, second organic fibers, and organic particles as other components can be used. Specific examples thereof are shown below.

### (First Organic fibers)

In the present embodiment, an organic material constituting the first organic fibers 3 is not particularly limited, and is preferably organic fibers composed of a water-insoluble (hydrophobic) organic material having a high melting point. When hydrophobic organic fibers are used as the first organic fibers 3, the adhesive force between the first organic fibers 3 and the organic film 2 can be further increased. As the first organic fibers 3, for example, polyethylene terephthalate fibers can be used.

### (Second Organic fibers)

As the material for the heat insulation material 1 of the cover protector 10 according to the present embodiment, it is preferable to contain the second organic fibers 4 having a property different from the first organic fibers 3. An organic material constituting the second organic fibers 4 is not particularly limited as long as it is different from the organic material constituting the first organic fibers 3, and is preferably an organic fibers composed of a hydrophilic organic material. When hydrophilic organic fibers are used as the second organic fibers 4, the moldability of the heat insulation material 1 can be improved. In addition, in the case where the heat insulation material 1 contains various particles (powder) or the like, the second organic fibers 4 can improve a particle retention property and suppress the falling off of the particles. As the second organic fibers 4, for example, vinylon fibers can be used.

### (Content of Organic fibers)

When contents of the first organic fibers 3 and the second organic fibers 4 in the heat insulation material 1 are appropriately controlled, the effects of the respective fibers can be sufficiently obtained.

In order to obtain excellent adhesiveness between the heat insulation material 1 and the organic film 2 and to maintain the moldability and the heat insulation property of the heat insulation material 1, it is preferable to appropriately adjust the content of the first organic fibers with respect to a total mass of the heat insulation material.

In the present embodiment, the second organic fibers 4 may not be contained in the heat insulation material 1, but it is preferable to appropriately adjust the content of the second organic fibers with respect to the total mass of the heat insulation material in order to improve the moldability of the heat insulation material 1, obtain a particle retention effect, and maintain the moldability and the heat insulation property of the heat insulation material 1.

### (Fiber Length of Organic fibers)

A fiber length of the organic fibers is not particularly limited, and from the viewpoint of ensuring the moldability and the processability, an average fiber length of the organic fibers is preferably 10 mm or less.

On the other hand, from the viewpoint of making the organic fibers function as a framework and ensuring a compressive strength of the heat insulation material, the average fiber length of the organic fibers is preferably 0.5 mm or more.

### <Inorganic fibers>

The heat insulation material 1 in the cover protector 10 according to the present embodiment may contain inorganic fibers as the fibers instead of the organic fibers, or may contain inorganic fibers together with the organic fibers. By containing the inorganic fibers, the heat insulation property of the heat insulation material can also be improved. As the inorganic fibers, a single kind of inorganic fiber may be used, or two or more kinds of inorganic fibers may be used in combination. Examples of the inorganic fibers include ceramic-based fibers such as silica fibers, alumina fibers, alumina silicate fibers, zirconia fibers, carbon fibers, soluble fibers, refractory ceramic fibers, an aerogel composite, magnesium silicate fibers, alkaline earth silicate fibers, potassium titanate fibers, silicon carbide fibers, and potassium titanate whisker fibers, glass-based fibers such as glass fibers, glass wool, and slag wool, and natural mineral-based fibers such as rock wool, basalt fibers, wollastonite, and mullite fibers.

These inorganic fibers are preferred in terms of heat resistance, strength, easy availability, and the like. Among the inorganic fibers, at least one kind selected from silica fibers, alumina fibers, alumina silicate fibers, zirconia fibers, glass fibers, and mineral-based fibers other than these fibers is particularly preferred from the viewpoint of handleability.

The cross-sectional shape of the inorganic fiber is not particularly limited, and examples thereof include a circular cross section, a flat cross section, a hollow cross section, a polygonal cross section, and a core cross section. Among them, an irregular cross section fiber having a hollow cross section, a flat cross section, or a polygonal cross section can be preferably used since the heat insulation property is slightly improved.

### (Average Fiber Length of Inorganic fibers)

The lower limit of an average fiber length of the inorganic fibers is preferably 0.1 mm, and the lower limit is more preferably 0.5 mm. On the other hand, the upper limit of the average fiber length of the inorganic fibers is preferably 50 mm, and the upper limit is more preferably 10 mm. When the average fiber length of the inorganic fibers is less than 0.1 mm, the inorganic fibers are unlikely to be entangled with each other, and the mechanical strength of the heat insulation material may decrease. On the other hand, when the average fiber length is more than 50 mm, a reinforcement effect can be obtained, but the inorganic fibers may not be able to entangle tightly with each other, or a single inorganic fiber may curl up, and thus the heat insulation property may decrease.

The lower limit of an average fiber diameter of the inorganic fibers is preferably 1 µm, the lower limit is more preferably 2 µm, and the lower limit is still more preferably 3 µm. On the other hand, the upper limit of the average fiber diameter of the inorganic fibers is preferably 15 µm, and the upper limit is more preferably 10 µm. When the average fiber diameter of the inorganic fibers is less than 1 µm, the mechanical strength of the inorganic fibers may decrease. In addition, from the viewpoint of the influence on human health, the average fiber diameter of the inorganic fibers is preferably 3 µm or more. On the other hand, when the average fiber diameter of the inorganic fibers is larger than 15 µm, solid heat transfer using the inorganic fibers as a medium may increase, resulting in a decrease in heat insulation property, and the moldability and the strength of the heat insulation material may deteriorate.

### (Content of Inorganic fibers)

In the present embodiment, in the case where the heat insulation material 1 contains inorganic fibers, a content of the inorganic fibers is preferably 3 mass% or more and 15 mass% or less with respect to the total mass of the heat insulation material.

In addition, the content of the inorganic fibers is preferably 5 mass% or more and 10 mass% or less with respect to the total mass of the heat insulation material. With such contents, the shape retention property, pressing force resistance, wind pressure resistance, and an ability to retain the inorganic particles of the inorganic fibers are exhibited in a well-balanced manner. In addition, when the content of the inorganic fibers is appropriately controlled, the organic fibers and the inorganic fibers are entangled with each other to form a three-dimensional network, so that the effect of retaining the inorganic particles and other blending materials to be described later can be further improved.

### (Infusible fibers)

The heat insulation material 1 may contain infusible fibers in addition to the first organic fibers 3, the inorganic fibers 16, and the second organic fibers 4. Examples of the infusible fibers include fibers obtained by subjecting thermoplastic resins, such as polyacrylonitrile, cellulose, and pitch, to an infusibility treatment. Note that, the infusible fibers are, for example, fibers that have been subjected to an infusibility treatment, and examples of the infusibility treatment include a method of crosslinking by irradiation with radiation, electron beams, or the like, and a method of exposing a material to a high temperature in oxygen or water vapor and making the material infusible by the action of oxygen.

### (Carbon Content)

The infusible fibers preferably have a carbon content of 55 mass% to 95 mass%. When the carbon content is 55 mass% or more, a weight loss due to thermal decomposition is already underway, so that the heat insulation material shrinks little due to the thermal decomposition, and retains the original shape and maintains the heat insulation property even when exposed directly to flame during thermal runaway. When the carbon content is 95 mass% or less, an endothermic reaction occurs to remove components other than carbon and to change the structure to a structure consisting only of carbon, so that a time for heat to reach a back surface of a flameproof structure can be delayed.

A preferred lower limit of the carbon content is 60 mass% or more. In addition, a preferred upper limit of the carbon content is 90 mass% or less, and a more preferred upper limit of the carbon content is 85 mass% or less.

The carbon content can be adjusted by a heat treatment. For example, a heat treatment in the air or in oxygen within a range of 150°C to 300°C can further promote the infusibility treatment and remove components other than carbon to increase the carbon content. For example, a heat treatment within a range of 300°C to 1000°C can advance formation of a condensed polycyclic aromatic structure and generate a decomposition gas to increase the carbon content.

Note that, the infusible fibers are not limited to fibers obtained by subjecting thermoplastic fibers to an infusibility treatment. Inorganic fibers may be used as long as the carbon content is within the above range.

### (Fiber Shape)

The infusible fibers are preferably short fibers. The short fibers indicate non-continuous fibers. Although the continuous fibers form a fiber bundle in which the fibers are oriented in the same direction as in cloth or filament winding, the use of the fibers results in an aggregate (a mat or a blanket, or a papermaking product) of fibers oriented in random directions. Since a heat insulation material using short fibers has a short conductive path, conductivity can be lowered even when carbonization progresses due to carbonized fibers or thermal runaway. In addition, the fibers are randomly oriented, and the fibers tend to come into point contact with each other, making it possible to lower heat conduction.

In the case of producing a heat insulation material containing infusible fibers, milled fibers or chopped fibers (fiber length: about 0.01 mm to 10 mm) of the infusible fibers are preferably used. The infusible fibers preferably have a fiber diameter of 1 µm to 30 µm. When the fiber diameter of the infusible fibers is 1 µm or more, even during exposure to a high temperature, a rate of air oxidation and sublimation can be suppressed and a flameproof effect can be maintained for a long time. On the other hand, when the fiber diameter of the infusible fibers is 30 µm or less, a certain degree of flexibility can be retained even during exposure to a high temperature and carbonization, and damages are less likely to occur even when deformation or impact occurs.

### <Inorganic particles>

The heat insulation material 1 in the cover protector 10 according to the present embodiment preferably contains the inorganic particles 6 in order to obtain a desired heat insulation property. As the inorganic particles, a single kind of inorganic particle may be used, or two or more kinds of inorganic particles may be used in combination. From the viewpoint of the heat insulation effect, as the kind of the inorganic particles, particles composed of at least one kind of inorganic material selected from oxide particles, carbide particles, nitride particles, and inorganic hydrate particles is preferably used, and more preferably oxide particles is used. The form thereof is not particularly limited. It is preferable to contain at least one kind selected from nanoparticles, hollow particles, and porous particles. Specifically, silica nanoparticles, metal oxide particles, inorganic balloons such as microporous particles or hollow silica particles, particles composed of a thermally expandable inorganic material, particles composed of a hydrous porous material, or the like can also be used.

When an average secondary particle diameter of the inorganic particles is 0.01 µm or more, the inorganic particles are easily available and an increase in production cost can be suppressed. When the average secondary particle diameter is 200 µm or less, a desired heat insulation effect can be obtained. Therefore, the average secondary particle diameter of the inorganic particles is preferably 0.01 µm or more and 200 µm or less, and more preferably 0.05 µm or more and 100 µm or less.

Note that, when two or more kinds of inorganic particles having different heat insulation effects are combined, a heating element can be cooled in multiple stages and a heat absorption effect can be exhibited over a wider temperature range. Specifically, it is preferable to use large-diameter particles and small-diameter particles in combination. For example, in the case of using nanoparticles as one of the inorganic particles, it is preferable to contain inorganic particles composed of a metal oxide as the other inorganic particles. Hereinafter, the inorganic particles will be described in more detail, with the small-diameter inorganic particles as first inorganic particles and the large-diameter inorganic particles as second inorganic particles.

### <First Inorganic particles>

### (Oxide particles)

When oxide particles are used as the first inorganic particles, radiant heat transfer can be suppressed particularly in a high temperature range with abnormal heat generation or the like. As the oxide particles, at least one kind of particle selected from silica, titania, zirconia, zircon, barium titanate, zinc oxide, and alumina can be used. That is, among the above oxide particles that can be used as the inorganic particles, only one kind or two or more kinds of oxide particles may be used. Particularly, silica is a component having a high heat insulation property, and titania is a component having a high refractive index compared to other metal oxides, and has a high effect of diffusely reflecting light and blocking radiant heat in a high temperature range of 500°C or higher. Therefore, silica and titania are most preferably used as the oxide particles.

Note that, since the oxide particles have a high refractive index and a strong effect of diffusely reflecting light, the particle diameter of the oxide particles may influence the effect of reflecting the radiant heat. Therefore, when an average primary particle diameter of the oxide particles is limited to a predetermined range, an even higher heat insulation property can be obtained.

### (Average primary particle diameter of oxide particles: 0.001 µm or more and 50 µm or less)

When the average primary particle diameter of the oxide particles is 0.001 µm or more, a wavelength thereof is sufficiently larger than a wavelength of light that contributes to heating, and it diffusely reflects the light efficiently. Therefore, in a high temperature range of 500°C or higher, the radiant heat transfer of heat within the cover protector can be suppressed, and the heat insulation property can be further improved. On the other hand, when the average primary particle diameter of the oxide particles is 50 µm or less, even with compression, the number of contact points between the particles does not increase, and it is difficult to form a conductive heat transfer path. Therefore, the influence on the heat insulation property particularly in a normal temperature range where the conductive heat transfer is dominant can be reduced.

Note that, in the present invention, the average primary particle diameter can be determined by observing particles with a microscope, comparing the particles with a standard scale, and taking an average of any 10 particles.

### (Nanoparticles)

In the present invention, the nanoparticle refers to a nanometer-order particle having a spherical or nearly spherical shape and having an average primary particle diameter of less than 1 µm. The nanoparticles have a low density and thus suppresses the conductive heat transfer, and when the nanoparticles are used as the first inorganic particles, void portions are further finely dispersed, so that an excellent heat insulation property of suppressing convective heat transfer can be obtained. Therefore, it is preferable to use nanoparticles since it can suppress the conduction of heat between adjacent nanoparticles during normal use of a battery in a normal temperature range.

Further, when nanoparticles having a small average primary particle diameter is used as the oxide particles, even in the case where the heat insulation material is compressed by expansion due to thermal runaway of a battery cell and the internal density increases, an increase in conductive heat transfer of the heat insulation material can be suppressed. This is thought to be because the nanoparticles tend to form fine void portions between particles due to a repulsive force caused by static electricity, and the bulk density thereof is low, so that the particles are used for filling so as to provide a cushioning property.

Note that, in the case of using the nanoparticles as the first inorganic particles, the kind thereof is not particularly limited as long as the above definition of nanoparticles is met. For example, since a silica nanoparticle is a material having a high heat insulation property and has a few contact points between particles, the amount of heat conducted by the silica nanoparticle is smaller than that in a case of using a silica particle having a large particle diameter. In addition, since a generally available silica nanoparticle has a bulk density of about 0.1 (g/cm³), even when a large compressive stress is applied to, for example, the heat insulation material, the size (area) or the number of contact points between the silica nanoparticles does not increase remarkably, and the heat insulation property can be maintained. Therefore, it is preferable to use silica nanoparticles as the nanoparticles. Examples of the silica nanoparticle include wet silica, dry silica, and aerogel. A silica nanoparticle that is particularly suitable for the present embodiment will be described below.

### (Average primary particle diameter of nanoparticles: 1 nm or more and 100 nm or less)

When the average primary particle diameter of the nanoparticles is limited to a predetermined range, an even higher heat insulation property can be obtained.

That is, when the average primary particle diameter of the nanoparticles is 1 nm or more and 100 nm or less, the convective heat transfer and the conductive heat transfer of the heat within the heat insulation material can be suppressed particularly in a temperature range of lower than 500°C, and the heat insulation property can be further improved. In addition, even in the case where a compressive stress is applied, void portions remaining between the nanoparticles and contact points between many particles can suppress the conductive heat transfer, and the heat insulation property of the heat insulation material can be maintained.

Note that, the average primary particle diameter of the nanoparticles is more preferably 2 nm or more, and still more preferably 3 nm or more. On the other hand, the average primary particle diameter of the nanoparticles is more preferably 50 nm or less, and still more preferably 10 nm or less.

### (Inorganic Hydrate particles)

The inorganic hydrate particles exhibit a so-called "heat absorption effect" that the inorganic hydrate particles receive heat from the heating element, thermally decompose when reaching a thermal decomposition start temperature or higher, release crystal water thereof, and lower the temperature of the heating element and surroundings. The inorganic hydrate particle form a porous material after releasing the crystal water, and exhibits a heat insulation effect due to countless air pores thereof.

Specific examples of the inorganic hydrate include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

For example, aluminum hydroxide has about 35% crystal water, and as shown in the following formula, thermally decomposes to release the crystal water and exhibits a heat absorption effect. Then, after releasing the crystal water, aluminum hydroxide forms alumina (Al₂O₃), which is a porous material, and functions as a heat insulation material.

2Al(OH)₃ → Al₂O₃ + 3H₂O

Note that, in a battery cell that has experienced thermal runaway, the temperature rapidly rises to higher than 200°C and continues to rise to around 700°C. Therefore, it is preferable that the inorganic particles contained in the heat insulation material 1 are composed of an inorganic hydrate whose thermal decomposition start temperature is 200°C or higher.

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

### (Average secondary particle diameter of inorganic hydrate particles: 0.01 µm or more and 200 µm or less)

In the case of using the inorganic hydrate particles as the first inorganic particles, when the average particle diameter thereof is too large, it takes a certain amount of time for the first inorganic particles (inorganic hydrate) near the center of the heat insulation material 1 to reach the thermal decomposition temperature thereof, so that the first inorganic particles near the center of the heat insulation material 1 may not be completely thermally decomposed. Therefore, the average secondary particle diameter of the inorganic hydrate particles is preferably 0.01 µm or more and 200 µm or less, and more preferably 0.05 µm or more and 100 µm or less.

### (Particles composed of Thermally Expandable Inorganic Material)

Examples of the thermally expandable inorganic material include vermiculite, bentonite, mica, and perlite.

### (Particles composed of Hydrous Porous Material)

Specific examples of the hydrous porous material include zeolite, kaolinite, montmorillonite, acid clay, diatomaceous earth, wet silica, dry silica, aerogel, mica, and vermiculite.

### (Inorganic Balloons)

The heat insulation material 1 used in the present invention may contain inorganic balloons as the first inorganic particles.

When inorganic balloons are contained, the convective heat transfer or the conductive heat transfer of the heat within the heat insulation material 1 can be suppressed in a temperature range of lower than 500°C, and the heat insulation property of the heat insulation material 1 can be further improved.

As the inorganic balloons, at least one kind selected from whitebait balloons, silica balloons, fly ash balloons, barite balloons, and glass balloons can be used.

### (Content of inorganic balloons: 60 mass% or less with respect to total mass of heat insulation material)

A content of the inorganic balloons is preferably 60 mass% or less with respect to the total mass of the heat insulation material.

### (Average particle diameter of inorganic balloons: 1 µm or more and 100 µm or less)

An average particle diameter of the inorganic balloons is preferably 1 µm or more and 100 µm or less.

### <Second Inorganic particles>

In the case where the heat insulation material 1 contains two kinds of inorganic particles, the second inorganic particles are not particularly limited as long as it is different from the first inorganic particles in material, particle diameter, or the like. As the second inorganic particles, oxide particles, carbide particles, nitride particles, inorganic hydrate particles, silica nanoparticles, metal oxide particles, inorganic balloons such as microporous particles or hollow silica particles, particles composed of a thermally expandable inorganic material, particles composed of a hydrous porous material, or the like can be used. Details of these are as described above.

Note that, nanoparticles have extremely low conductive heat transfer and can maintain an excellent heat insulation property even when a compressive stress is applied to the heat insulation material. In addition, metal oxide particles such as titania has a high effect of blocking radiant heat. Further, when large-diameter inorganic particles and small-diameter inorganic particles are used, the small-diameter inorganic particles enter gaps between the large-diameter inorganic particles, leading to a more dense structure, and the heat insulation effect can be improved. Therefore, in the case of using, for example, nanoparticles as the first inorganic particles, it is preferable that the heat insulation material further contains, as the second inorganic particles, particles composed of a metal oxide having a diameter larger than that of the first inorganic particles.

Examples of the metal oxide include silicon oxide, titanium oxide, aluminum oxide, barium titanate, zinc oxide, zircon, and zirconium oxide. Particularly, titanium oxide (titania) is a component having a high refractive index compared to other metal oxides, and has a high effect of diffusely reflecting light and blocking radiant heat in a high temperature range of 500°C or higher. Therefore, titania is most preferably used.

In the case where at least one kind of particle selected from a silica nanoparticle and silica aerogel is used as the first inorganic particles, and at least one kind of particle selected from titania, zircon, zirconia, silicon carbide, zinc oxide, and alumina is used as the second inorganic particles, in order to obtain an excellent heat insulation performance within a temperature range of 90°C or lower, a content of the first inorganic particles is preferably 50 mass% or more, more preferably 60 mass% or more, and still more preferably 70 mass% or more, with respect to a total mass of the inorganic particles. In addition, the content of the first inorganic particles is preferably 95 mass% or less, more preferably 90 mass% or less, and still more preferably 80 mass% or less, with respect to the total mass of the inorganic particles.

On the other hand, in order to obtain an excellent heat insulation performance within a temperature range of higher than 90°C, the content of the second inorganic particles is preferably 5 mass% or more, more preferably 10 mass% or more, and still more preferably 20 mass% or more, with respect to the total mass of the inorganic particles. In addition, the content of the second inorganic particles is preferably 50 mass% or less, more preferably 40 mass% or less, and still more preferably 30 mass% or less, with respect to the total mass of the inorganic particles.

### (Average primary particle diameter of second inorganic particles)

In the case where the second inorganic particles composed of a metal oxide are contained in the heat insulation material, when an average primary particle diameter of the second inorganic particles is 1 µm or more and 50 µm or less, the radiant heat transfer can be efficiently suppressed in a high temperature range of 500°C or higher. The average primary particle diameter of the second inorganic particles is more preferably 5 µm or more and 30 µm or less, and most preferably 10 µm or less.

### (Content of Inorganic particles)

In the present embodiment, when a total content of the inorganic particles in the heat insulation material 1 is appropriately controlled, a sufficient heat insulation property can be ensured in the heat insulation material 1.

The total content of the inorganic particles is preferably 60 mass% or more, and more preferably 70 mass% or more, with respect to the total mass of the heat insulation material. When the total content of the inorganic particles is too large, the content of the organic fibers decreases relatively. Therefore, in order to obtain a sufficient framework reinforcement effect and inorganic particle retention effect, the total content of the inorganic particles is preferably 95 mass% or less, and more preferably 90 mass% or less, with respect to the total mass of the heat insulation material.

Note that, the content of the inorganic particles in the heat insulation material can be calculated, for example, by heating the heat insulation material at 800°C, decomposing organic components, and then measuring the mass of the remaining portion.

### <Organic particles>

The heat insulation material 1 in the cover protector 10 according to the present embodiment may contain organic particles. As the organic particles, hollow polystyrene particles or the like can be used.

### <Other Blending Materials>

### (Resin Binder)

The materials for the heat insulation material 1 in the present embodiment can also be bound by a resin binder. As the resin binder, for example, a resin binder containing at least one kind selected from a styrene-butadiene resin, an acrylic resin, a silicone-acrylic resin, and a styrene resin can be used.

A glass transition point of the resin binder is not particularly defined, and is preferably -10°C or higher. Note that, when the glass transition point of the resin binder is equal to or higher than room temperature, in the case of using a heat insulation material containing the resin binder at room temperature, the strength of the heat insulation material can be further improved. Therefore, the glass transition point of the resin binder is, for example, more preferably 20°C or higher, still more preferably 30°C or higher, even more preferably 50°C or higher, and particularly preferably 60°C or higher.

A content of the resin binder is preferably 0.5 mass% or more, and more preferably 1 mass% or more with respect to the total mass of the heat insulation material. In addition, it is preferably 20 mass% or less, and more preferably 10 mass% or less.

### (Hot Melt Powder)

In addition to the various materials described above, a hot melt powder may be contained in a mixture in the case of producing the heat insulation material 1. By containing the hot melt powder in the material mixture of the heat insulation material 1 and heating the same, when the hot melt powder is cooled after melting, the hot melt powder, including the surrounding inorganic particles, hardens. Therefore, the falling off of the inorganic particles from the heat insulation material can be further suppressed.

Examples of the hot melt powder include those having various melting points, and it is sufficient to select a hot melt powder having an appropriate melting point. Examples of the component constituting the hot melt powder include a polyethylene, a polyester, a polyamide, and ethylene vinyl acetate.

### (Content of Hot Melt Powder)

In the case where the hot melt powder is contained in the materials for the heat insulation material, a powder falling suppression effect can be obtained even when a content thereof is very small. Therefore, the content of the hot melt powder is preferably 0.5 mass% or more, and more preferably 1 mass% or more, with respect to a total mass of the materials constituting the heat insulation material.

On the other hand, when the content of the hot melt powder is increased, the content of the inorganic particles or the like decreases relatively. Therefore, in order to obtain a desired heat insulation performance, the content of the hot melt powder is preferably 5 mass% or less, and more preferably 4 mass% or less, with respect to the total mass of the materials constituting the heat insulation material.

Note that, the heat insulation material 1 in the cover protector 10 according to the present embodiment can further contain a binding agent, a colorant, and the like, if necessary. All of these are useful for reinforcing the heat insulation material 1 and improving the moldability, and a total amount thereof is preferably 10 mass% or less with respect to the total mass of the heat insulation material.

In the present invention, as a method for producing the heat insulation material 1, for example, a generally used wet method and dry method can be used. As the materials during the production, a material suitable for the production method may be selected from the materials listed above according to the required properties.

### [Inorganic Fiber Layer]

The inorganic fiber layer 7 shown in the third embodiment is, for example, a layer of inorganic fibers, and the inorganic fibers to be used is not particularly limited. For example, the inorganic fibers described above for the heat insulation material 1 can also be used. Among them, silica fibers, alumina fibers, glass fibers, metal fibers, and the like are preferably used because of being inexpensive, having excellent handling properties, and having high heat resistance.

Note that, the inorganic fibers are not limited in shape such as a fiber diameter. However, in consideration of preventing the collision of scattered matters during thermal runaway, the smaller the opening is, the better.

### [Adhesive]

In the case of bonding the heat insulation material 1 to the organic film 2 and the inorganic fiber layer 7 to the organic film 12 by an adhesive, the adhesive preferably contains an organic material. After the adhesive is disposed on one of the members to be bonded and the other member is disposed on the adhesive, the two members can be bonded to each other by, for example, heating and pressurizing the members. Note that, a content of the organic material in the adhesive is preferably 80 mass% or more with respect to a total mass of the adhesive.

The organic material is not particularly limited, and examples thereof include a synthetic rubber, a polyolefin-based organic material, a polyamide-based organic material, and a polyurethane-based organic material. Among these organic materials, at least one of a polyolefin-based organic material and a polyamide-based organic material is preferably contained. In particular, when a polyolefin-based organic material is used as the organic material contained in the adhesive, the cost of the adhesive can be reduced. When a polyamide-based organic material is used as the organic material contained in the adhesive, the bonding strength can be improved. Therefore, the material for an adhesive layer may be selected according to the required properties.

Note that, specific examples of the polyolefin-based organic material include a polyethylene and a polypropylene. These materials have properties such as flexibility, absorption of impact, softness, low rigidity, easy deformation, and stretching into a film shape. Therefore, a polyethylene and a polypropylene can be suitably used as the material for the adhesive.

### [Method for Producing Cover Protector]

Hereinafter, a method of producing the cover protector 10 according to the first embodiment will be described in order of steps.

### <Heat Insulation Material Preparation Step>

First, a material for a heat insulation material containing the first organic fibers 3, the second organic fibers 4, and the inorganic particles 6 is processed into a sheet shape. At this time, the heat insulation material is prepared such that the first organic fibers 3 protrude from at least the first surface among the first surface and the second surface, which are a pair of main surfaces facing each other, of the heat insulation material. A dry method or a wet papermaking method can be used as a method for preparing the sheet-shaped heat insulation material from the material for a heat insulation material. The dry method and the wet papermaking method will be described below.

### (Dry Method)

First, the material for a heat insulation material containing the first organic fibers 3, the second organic fibers 4, and the inorganic particles 6 is charged into a mixer such as a V-type mixer at a predetermined ratio to prepare a mixture. As the fibers contained in the material for a heat insulation material, only the inorganic fibers 16 described in the second embodiment may be used, or the inorganic fibers 16 may be used together with the first organic fibers 3 and the second organic fibers 4. In the case of preparing the heat insulation material 1 by a dry method, a solvent such as water is not added to the mixture. However, in the case of using water-soluble organic fibers as the second organic fibers 4, a small amount of a solvent such as water may be added within the range of the dry method in order to improve the moldability and the particle retention property of the heat insulation material 1. For example, by adding a small amount of a solvent such as water to the mixture, an effect of further suppressing scattering of the inorganic particles during the production can be obtained. The effect of using the water-soluble organic fibers can also be obtained by adding moisture from the outside after molding.

Thereafter, the obtained mixture is charged into a predetermined mold and pressurized with a pressing machine or the like, and the obtained molded body is heated. Thereafter, by cooling the heated mixture, the heat insulation material 1 processed into a sheet shape can be obtained.

Note that, the method for preparing the heat insulation material such that the first organic fibers 3 or the second organic fibers 4 protrude from the first surface of the heat insulation material is not particularly limited. For example, when the obtained mixture is charged into a predetermined mold, the mixture is passed through a mesh sheet having a predetermined mesh to such an extent that the first organic fibers 3 and the second organic fibers 4 are not completely separated, whereby the first organic fibers 3 and the second organic fibers 4 can be disposed above the mixture so as to protrude from an upper surface of the mixture. Accordingly, it is possible to obtain the heat insulation material 1 having excellent adhesiveness to the organic film 2.

### (Wet Papermaking Method)

In the wet papermaking method, first, the material for a heat insulation material is mixed in water and stirred with a stirrer to prepare a mixed liquid. Thereafter, the mixed liquid is dehydrated by sucking moisture from a back side of a mesh for filtration through the mesh to prepare a wet sheet. Thereafter, the obtained wet sheet is heated and pressurized, whereby the heat insulation material 1 can be obtained. Note that, before the heating and pressurizing step, a ventilation drying treatment may be performed in which hot air is passed through the wet sheet to dry the sheet, or the wet sheet may be heated and pressurized in a wet state without being subjected to the ventilation drying treatment.

According to the wet papermaking method, when the moisture in the mixed liquid is sucked from the back side of the mesh, the fibers protrude from the back side of the mesh. Therefore, in the case of preparing the heat insulation material 1, the surface on the mesh side can be set as the first surface 1a, and at least the first surface 1a side can be set as a surface to bond to the organic film 2. Note that, after the mixed liquid is poured onto the mesh and the moisture is sucked to some extent, the wet sheet is turned upside down and disposed on the mesh, and the remaining moisture is sucked from the back side of the mesh, followed by drying, whereby the heat insulation material 1 in which the fibers protrude from both the first surface 1a and the second surface 1b can be obtained.

### <bonding Step>

Next, the organic film 2 is bonded to at least a part of the surface of the obtained heat insulation material 1. In this bonding step, the organic film 2 is bonded to at least the first surface 1a side of the heat insulation material 1. In the case where the fibers protrude from both the first surface 1a and the second surface 1b of the heat insulation material 1, the organic film 2 may be bonded to both surfaces.

As a method for bonding the heat insulation material 1 to the organic film 2, as described above, an adhesive may be used, or a method in which the heat insulation material 1 and the organic film 2 are stacked and then pressurized while being heated can be used. In this way, the cover protector 10 according to the present embodiment can be produced.

With the method for producing the cover protector according to the present embodiment, since the heat insulation material 1 having excellent adhesiveness to the organic film 2 can be easily produced, the cover protector can be easily produced at a low production cost.

### [Battery Module]

Fig. 4 is a cross-sectional view schematically showing a battery module according to an embodiment of the present invention. As shown in Fig. 4, a battery module 100 includes a plurality of storage batteries 110 housed in a battery case 120. In addition, electrode terminals 111 of the storage batteries 110 are connected in series by bus bars 130.

The battery case 120 has a ceiling surface 120a, a side wall surface 120b, and a bottom wall surface 120c inside. The cover protector 10 according to the first embodiment is attached to, for example, the entire ceiling surface 120a of the battery case 120 by a tape or the like. Note that, although not shown, the cover protector 10 is disposed such that a surface of the cover protector 10 to which the organic film 2 is bonded faces a ceiling surface side of the battery case 120.

In the battery module 100 configured as described above, since the cover protector 10 includes the heat insulation material 1 and the organic film 2, and these have excellent adhesiveness, it is possible to suppress the heat insulation material 1 from peeling off from the ceiling surface 120a when the storage battery 110 is used. Therefore, the heat insulation property of the heat insulation material 1 can be maintained, and even when a flame is generated, spreading of the flame to the outside can be more reliably prevented.

Further, in the case where the cover protector 10 shown in Fig. 4 is changed to the cover protector 20 according to the third embodiment, the inorganic fiber layer 7 can be disposed on a storage battery 110 side in the heat insulation material 1. In the battery module configured as described above, in the case where the storage battery 110 ruptures due to thermal runaway, the heat insulation material can be protected by the inorganic fiber layer 7, so that breakage of the heat insulation material 1 can be suppressed, and the heat insulation property of the heat insulation material 1 can be further maintained.

Note that, in the battery module 100 shown in Fig. 4, the cover protector 10 is attached only to the ceiling surface 120a of the battery case 120, but the present invention is not limited to this configuration. For example, by attaching the cover protector 10 to at least one of the ceiling surface 120a, the side wall surface 120b, and the bottom wall surface 120c of the battery case 120, the heat transfer to the outside of the battery case 120 can be delayed. In addition, when the cover protector 10 is attached to all of the ceiling surface 120a, the side wall surface 120b, and the bottom wall surface 120c of the battery case 120, the heat insulation property and the flameproof property can be further improved. Further, the cover protector 10 may be attached between the plurality of storage batteries 110.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-053778) filed on March 29, 2023 and a Japanese patent application (Japanese Patent Application No. 2024-018669) filed on February 9, 2024, and the contents thereof are incorporated herein by reference.

### REFERENCE SIGNS LIST

1 heat insulation material
2, 12 organic film
3 first organic fiber
4 second organic fiber
5 contact region
6 inorganic particle
7 inorganic fiber layer
8 inorganic particle
10, 20 cover protector
100 battery module
110 storage battery
120 battery case

## Claims

1. A cover protector comprising:
a heat insulation material containing fibers including first organic fibers and/or inorganic fibers; and
an organic film bonded to at least a part of a surface of the heat insulation material, wherein
at least a part of the fibers protrudes from the surface of the heat insulation material.

2. The cover protector according to claim 1, wherein the first organic fibers are water-insoluble.

3. The cover protector according to claim 1, wherein the heat insulation material contains the first organic fibers and second organic fibers having a different property from the first organic fibers.

4. The cover protector according to claim 3, wherein the second organic fibers are water-soluble.

5. The cover protector according to claim 4, wherein
the first organic fibers are polyethylene terephthalate fibers, and
the second organic fibers are vinylon fibers.

6. The cover protector according to claim 1, wherein the inorganic fibers include at least one kind selected from silica fibers, alumina fibers, alumina silicate fibers, zirconia fibers, glass fibers, and mineral-based fibers other than these fibers.

7. The cover protector according to claim 1, wherein the fibers protruding from the surface of the heat insulation material are fused to the organic film.

8. The cover protector according to claim 1, wherein
the heat insulation material has a first surface and a second surface facing each other,
the organic film is disposed on the first surface, and
an inorganic fiber layer is disposed on the second surface.

9. The cover protector according to claim 8, wherein the heat insulation material and the inorganic fiber layer are bonded to each other by an adhesive layer.

10. The cover protector according to claim 8, wherein the heat insulation material and the inorganic fiber layer are covered with the organic film.

11. The cover protector according to claim 8, wherein the inorganic fiber layer is obtained by processing at least one kind selected from silica fibers, alumina fibers, glass fibers, and metal fibers into a layer shape.

12. A method for producing the cover protector according to any one of claims 1 to **11** comprising:
a heat insulation material preparation step of preparing the heat insulation material by processing a material for a heat insulation material containing fibers including the first organic fibers and/or the inorganic fibers into a sheet shape; and
a bonding step of bonding the organic film to at least a part of the surface of the heat insulation material, wherein
in the heat insulation material preparation step, the heat insulation material is prepared such that, among the first surface and the second surface of the heat insulation material facing each other, the fibers protrude from at least the first surface, and
in the bonding step, the organic film is bonded to the first surface of the heat insulation material.

13. The method for producing a cover protector according to claim 12, wherein in the heat insulation material preparation step, the heat insulation material is prepared from the material for a heat insulation material by a wet papermaking method.

14. The method for producing a cover protector according to claim 12, wherein in the bonding step, the first surface of the heat insulation material and the organic film are bonded to each other by an adhesive or thermal fusion.

15. A battery module comprising:
the cover protector according to any one of claims 1 to **11;**
a storage battery; and
a battery case housing the cover protector and the storage battery.

16. The battery module according to claim 15, wherein
the battery case has a ceiling surface, a side wall surface, and a bottom wall surface inside, and
the organic film in the cover protector is bonded to at least one selected from the ceiling surface, the side wall surface, and the bottom wall surface so that the cover protector is attached inside the battery case.
